Europäisches Patentamt

European Patent Office

Office européen des brevets

(19)

(11) Veröffentlichungsnummer: **0 319 977**
**A2**

(12) **EUROPÄISCHE PATENTANMELDUNG**

(21) Anmeldenummer: 88120539.7

(22) Anmeldetag: 08.12.88

(51) Int. Cl.⁴: **C08G 77/10**

(30) Priorität: 11.12.87 DE 3742069

(43) Veröffentlichungstag der Anmeldung:
14.06.89 Patentblatt 89/24

(84) Benannte Vertragsstaaten:
**BE DE ES FR GB IT NL**

(71) Anmelder: **WACKER-CHEMIE GMBH**
**Prinzregentenstrasse 22**
**D-8000 München 22(DE)**

(72) Erfinder: **Wegehaupt, Karl-Heinrich, Dr.**
**Dipl.-Chem.**
**Marktler Strasse 78**
**D-8263 Burghausen(DE)**
Erfinder: **Braunsperger, Karl**
**Unterhadermark 86**
**D-8263 Burghausen(DE)**
Erfinder: **Patzke, Jörg, Dr. Dipl-Chem.**
**Marienbergerstrasse 41**
**D-8263 Burghausen(DE)**

(54) **Verfahren zur Herstellung von Diorganopolysiloxanen mit Triorganosiloxygruppen als endständigen Einheiten.**

(57) Diorganopolysiloxane mit Triorganosiloxygruppen als endständigen Einheiten werden dadurch hergestellt, daß

in einer 1. Stufe cyclisches Diorganopolysiloxan und/oder Diorganodichlorsilanhydrolysat mit 0,05 bis 3 Gewichts-% Triorganochlorsilan, bezogen auf das Gewicht der jeweils eingesetzten Menge an. cyclischem Diorganopolysiloxan und/oder Diorganodichlorsilanhydrolysat, in Gegenwart von 1 bis 50 Gewichts-ppm Phosphornitridchlorid, bezogen auf das Gesamtgewicht der jeweils eingesetzten Menge an Organosiliciumverbindungen, zu α-Triorganosiloxy-ω-chlordiorganopolysiloxan umgesetzt wird und

in einer 2. Stufe das in der 1. Stufe erhaltene α-Triorganosiloxy-ω-chlor-diorganopolysiloxan in einer Kondensationsreaktion durch Zugabe von in den endständigen Einheiten je eine Si-gebundene Hydroxylgruppe aufweisendem Diorganopolysiloxan zur Reaktionsmischung der 1. Stufe, in Mengen von 1 bis 1,2 Grammol Si-gebundener Hydroxylgruppe in diesem Diorganopolysiloxan je Grammatom Si-gebundenen Chlors im Triorganochlorsilan, weiter umgesetzt wird und

in einer 3. Stufe nach Zugabe von Hexaorganodisilazan zur Reaktionsmischung der 2. Stufe zum Unwirksammachen von Phosphornitridchlorid und zum Entfernen von Chlorwasserstoff von den Diorganopolysiloxanen mit Triorganosiloxygruppen als endständigen Einheiten die niedrig siedenderen Bestandteile destillativ entfernt werden.

## Verfahren zur Herstellung von Diorganopolysiloxanen mit Triorganosiloxygruppen als endständigen Einheiten

Die Erfindung betrifft ein Verfahren zur Herstellung von Diorganopolysiloxanen mit Triorganosiloxygruppen als endständigen Einheiten.

Aus GB-PS 1 195 761 (veröffentlicht 24. Juni 1970, Wacker-Chemie GmbH) ist bekannt, Organohalogensiliciumverbindungen durch Umsetzung von Halogensiliciumverbindungen mit Organosiloxanen, die kein Si-gebundenes Halogen enthalten in Gegenwart von Phosphornitridchlorid herzustellen. Gemäß Beispiel 9 der GB-PS 1 195 761 erfolgt die Herstellung von $\alpha$-Trimethylsiloxy-$\omega$-chlor-dimethylpolysiloxan durch Umsetzung von Trimethylchlorsilan und Octamethylcyclotetrasiloxan in Gegenwart von Phosphornitridchlorid.

Es bestand die Aufgabe ein Verfahren zur Herstellung von Diorganopolysiloxanen mit Triorganosiloxygruppen als endständigen Einheiten bereitzustellen, bei dem die Viskosität dieser Diorganopolysiloxane gezielt gesteuert werden kann. Es bestand weiterhin die Aufgabe Diorganopolysiloxane mit Triorganosiloxygruppen als endständigen Einheiten aus verhältnismäßig leicht zugänglichen Organosiliciumverbindungen, mit verhältnismäßig geringem Aufwand, in guten Ausbeuten und mit enger Molekulargewichtsverteilung herzustellen. Diese Aufgaben werden durch die Erfindung gelöst.

Gegenstand der Erfindung ist ein Verfahren zur Herstellung von Diorganopolysiloxanen mit Triorganosiloxygruppen als endständigen Einheiten, dadurch gekennzeichnet, daß in einer 1. Stufe cyclisches Diorganopolysiloxan und/oder Diorganodichlorsilanhydrolysat mit 0,05 bis 3 Gewichts-% Triorganochlorsilan, bezogen auf das Gewicht der jeweils eingesetzten Menge an cyclischem Diorganopolysiloxan und/oder Diorganodichlorsilanhydrolysat, in Gegenwart von 1 bis 50 Gewichts-ppm Phosphornitridchlorid, bezogen auf das Gesamtgewicht der jeweils eingesetzten Menge an Organosiliciumverbindungen, zu $\alpha$-Triorganosiloxy-$\omega$-chlordiorganopolysiloxan umgesetzt wird und

in einer 2. Stufe das in der 1. Stufe erhaltene $\alpha$-Triorganosiloxy-$\omega$-chlor-diorganopolysiloxan in einer Kondensationsreaktion durch Zugabe von in den endständigen Einheiten je eine Si-gebundene Hydroxylgruppe aufweisendem Diorganopolysiloxan zur Reaktionsmischung der 1. Stufe, in Mengen von 1 bis 1,2 Grammol Si-gebundener Hydroxylgruppe in diesem Diorganopolysiloxan je Grammatom Si-gebundenen Chlors im Triorganochlorsilan, weiter umgesetzt wird und

in einer 3. Stufe nach Zugabe von Hexaorganodisilazan zur Reaktionsmischung der 2. Stufe zum Unwirksammachen von Phosphornitridchlorid und zum Entfernen von Chlorwasserstoff von den Diorganopolysiloxanen mit Triorganosiloxygruppen als endständigen Einheiten die niedrig siedenderen Bestandteile destillativ entfernt werden.

Gemäß GB-PS 1 195 761 wurden sehr viel größere Mengen an Halogensiliciumverbindungen als auch an Phosphornitridchlorid eingesetzt als gemäß der 1. Stufe des erfindungsgemäßen Verfahrens. Aus GB-PS 1 195 761 war weiterhin nichts über die Herstellung von Diorganopolysiloxanen mit Triorganosiloxygruppen als endständigen Einheiten bzw. über ein Verfahren zur Steuerung der Viskosität dieser Diorganopolysiloxane zu entnehmen und es lag auch nicht nahe.

Bei der 1. Stufe des erfindungsgemäßen Verfahrens wird als cyclisches Diorganopolysiloxan vorzugsweise solches der Formel

$(R_2SiO)_n$

eingesetzt, wobei R gleiche oder verschiedene, gegebenenfalls halogenierte Kohlenwasserstoffreste mit 1 bis 18 Kohlenstoffatom(en) je Rest bedeutet und n eine ganze Zahl im Wert von 3 bis 11 ist.

Es kann eine Art von cyclischem Diorganopolysiloxan eingesetzt werden. Es kann aber auch ein Gemisch aus mindestens zwei verschiedenen Arten von cyclischen Diorganopolysiloxanen eingesetzt werden, wobei die Verschiedenheit aus unterschiedlicher Ringgröße und/oder unterschiedlichen Substituenten der Siliciumatome bestehen kann.

Bei der 1. Stufe des erfindungsgemäßen Verfahrens wird als Diorganodichlorsilanhydrolysat vorzugsweise solches eingesetzt, das aus 20 bis 30 Gewichts-% cyclischem Diorganopolysiloxan der Formel

$(R_2SiO)_n$

und aus 70 bis 80 Gewichts-% Diorganopolysiloxan der Formel

$$HO(R_2SiO)_mSiR_2OH$$

besteht, jeweils bezogen auf das Gewicht der jeweils eingesetzten Menge an Diorganodichlorsilanhydrolysat, wobei R und n die oben dafür angegebene Bedeutung haben und m eine ganze Zahl im Wert von 20 bis 50 ist.

Beispiele für Kohlenwasserstoffreste R sind Alkylreste, wie der Methyl- und Ethylrest sowie Butyl-, Decyl-, und Octadecylreste; Kohlenwasserstoffreste mit mindestens einer aliphatischen Mehrfachbindung, wie der Vinylrest; Arylreste, wie der Phenylrest; Alkarylreste, wie Tolylreste; und Aralkylreste, wie der Benzylrest. Beispiele für halogenierte Kohlenwasserstoffreste R sind Halogenalkylreste, wie der 3,3,3-Trifluorpropylrest, und Halogenarylreste, wie o-, p-und m-Chlorphenylreste.

Das erfindungsgemäße Verfahren dürfte jedoch die größte Bedeutung für den Einsatz von solchen cyclischen Diorganopolysiloxanen und/oder Diorganodichlorsilanhydrolysaten haben, worin alle organischen Reste Methylgruppen sind.

Bei der 1. Stufe des erfindungsgemäßen Verfahrens wird als Triorganochlorsilan vorzugsweise solches der Formel

$$R_3SiCl$$

eingesetzt, wobei R die oben dafür angegebene Bedeutung hat.

Besonders bevorzugt als Triorganochlorsilan ist Vinyldimethylchlorsilan. Ein wichtiges bei dem erfindungsgemäßen Verfahren einsetzbares Triorganochlorsilan ist Trimethylchlorsilan.

Durch die Menge an Triorganochlorsilan im Bereich von 0,05 bis 3 Gewichts-%, insbesondere 0,3 bis 2 Gewichts-%, jeweils bezogen auf das Gewicht der jeweils eingesetzten Menge an cyclischem Diorganopolysiloxan und/oder Diorganodichlorsilanhydrolysat, mit der cyclisches Diorganopolysiloxan und/oder Diorganodichlorsilanhydrolysat in der 1. Stufe des erfindungsgemäßen Verfahrens umgesetzt wird, läßt sich die Viskosität des Endprodukts - des Diorganopolysiloxans mit Triorganosiloxygruppen als endständigen Einheiten - gezielt steuern.

Bei den Phosphornitridchloriden, die in der 1. Stufe des erfindungsgemäßen Verfahrens eingesetzt werden und in der Reaktionsmischung der 2. Stufe des erfindungsgemäßen Verfahrens noch vorhanden sind, kann es sich z. B. um solche handeln, die durch Umsetzung von 400 Gewichtsteilen Phosphorpentachlorid mit 130 Gewichtsteilen Ammoniumchlorid hergestellt wurden (vgl. z. B. "Bericht der Deutschen Chemischen Gesellschaft", 57. Jahrgang 1924, Seite 1345), oder solche sein, die durch Umsetzung von 2 Mol Phosphorpentachlorid mit 1 Mol Ammoniumchlorid erhältlich sind (vgl. z. B. US 3 839 388, ausgegeben 1. Oktober 1974, S. Nitzsche et al., Wacker-Chemie GmbH). Selbstverständlich können auch Gemische aus mindestens zwei verschiedenen Arten von Phosphornitridchloriden verwendet werden.

Phosphornitridchlorid wird in Mengen von 1 bis 50 Gewichts-ppm, besonders bevorzugt in Mengen von 20 bis 40 Gewichts-ppm, jeweils bezogen auf das Gewicht der jeweils eingesetzten Menge an Organosiliciumverbindungen, verwendet.

Die Umsetzung von cyclischem Diorganopolysiloxan und/oder Diorganodichlorsilanhydrolysat mit Triorganochlorsilan in Gegenwart von Phosphornitridchlorid in der 1. Stufe des erfindungsgemäßen Verfahrens findet bei einer Temperatur von vorzugsweise 60 bis 100 °C, besonders bevorzugt 70 bis 90 °C, und vorzugsweise beim Druck der umgebenden Athmosphäre, also bei 1020 hPa (abs.) oder etwa 1020 hPa (abs.) statt. Falls erwünscht, können bei der Umsetzung aber auch höhere oder niedrigere Drücke angewendet werden. Die bevorzugten Reaktionszeiten liegen im Bereich von 3 bis 8 Stunden.

Nach der Reaktion von cyclischem Diorganopolysiloxan und/oder Diorganodichlorsilanhydrolysat mit Triorganochlorsilan in Gegenwart von Phosphornitridchlorid wird das in der 1. Stufe des erfindungsgemäßen Verfahrens erhaltene α-Triorganosiloxy-ω-chlor-diorganopolysiloxan in der 2. Stufe des erfindungsgemäßen Verfahrens durch Zugabe von in den endständigen Einheiten je eine Si-gebundene Hydroxylgruppe aufweisendem Diorganopolysiloxan zu der Reaktionmischung der 1. Stufe zu Diorganopolysiloxan mit Triorganosiloxygruppen als endständigen Einheiten umgesetzt.

Bei der 2. Stufe des erfindungsgemäßen Verfahrens wird als in den endständigen Einheiten je eine Si-gebundene Hydroxylgruppe aufweisendem Diorganopolysiloxan solches der Formel

$$HO(R_2SiO)_pSiR_2OH$$

eingesetzt, wobei R die oben dafür angegebene Bedeutung hat und p eine ganze Zahl im Wert von 8 bis 13 ist.

Besonders bevorzugt wird bei dem erfindungsgemäßen Verfahren als in den endständigen Einheiten je eine Si-gebundene Hydroxylgruppe aufweisendem Diorganopolysiloxan solches eingesetzt, worin alle organischen Reste Methylgruppen sind.

In den endständigen Einheiten je eine Si-gebundene Hydroxylgruppe aufweisendem Diorganopolysiloxan wird in Mengen von 1 bis 1,2 Grammmol Si-gebundener Hydroxylgruppe in diesem Diorganopolysiloxan je Gramatom Si-gebundenen Chlors im Triorganochlorsilan eingesetzt.

Die Umsetzung von in den endständigen Einheiten je eine Si-gebundene Hydroxylgruppe aufweisendem Diorganopolysiloxan mit $\alpha$ -Triorganosiloxy-$\omega$-chlor-diorganopolysiloxan zu Diorganopolysiloxan mit Triorganosiloxygruppen als endständigen Einheiten in der 2. Stufe des erfindungsgemäßen Verfahrens findet vorzugsweise bei einer Temperatur von 75 bis 100°C, besonders bevorzugt 85 bis 95°C statt. Um die Abführung des bei der Kondensationsreaktions gebildeten Chlorwasserstoffs zu erleichtern, wird diese Umsetzung vorzugsweise bei einem Druck unterhalb 30 hPa (abs.) durchgeführt. Diese Umsetzung ist aber auch bei höheren Drücken durchführbar. Die bevorzugten Reaktionszeiten liegen im Bereich von 2 bis 3 Stunden.

Um die in der 2. Stufe des erfindungsgemäßen Verfahrens erhaltenen Diorganopolysiloxane mit Triorganosiloxygruppen als endständigen Einheiten gegen Viskositätsänderungen zu stabilisieren wird in der 3. Stufe des erfindungsgemäßen verfahrens durch Zugabe von Hexaorganodisilazan zur Reaktionsmischung der 2. Stufe das Phosphornitridchlorid unwirksam gemacht und dabei auch gleichzeitig restlicher Chlorwasserstoff entfernt.

Bei der 3. Stufe des erfindungsgemäßen Verfahrens wird als Hexaorganodisilazan vorzugsweise solches der Formel

$$(R_3Si)_2NH ,$$

wobei R die oben dafür angegebene Bedeutung hat, eingesetzt.

Besonders bevorzugt als Hexaorganodisilazan ist ein solches, das in der Auswahl der Organogruppen der endständigen Triorganosiloxygruppe des herzustellenden Diorganopolysiloxans entspricht, wie z.B. das 1,3-Divinyl-1,1,3,3-tetramethyldisilazan bei der Herstellung eines vinyldimethylsiloxyendstandigen Diorganopolysiloxans. Ein wichtiges bei dem erfindungsgemäßen Verfahren einsetzbares Hexaorganodisilazan ist auch Hexamethyldisilazan.

Hexaorganodisilazan wird in Mengen von vorzugsweise 0,3 bis 0,5 Gewichts-%, bezogen auf das Gewicht der jeweils eingesetzten Menge an cyclischem Diorganopolysiloxan und/oder Diorganodichlorsilanhydrolysat, eingesetzt.

Von den Diorganopolysiloxanen mit Triorganosiloxygruppen als endständigen Einheiten werden die niedrig siedenderen Bestandteile, bei denen es sich insbesondere um cyclische Diorganopolysiloxane und überschüssiges Hexaorganodisilazan sowie dessen Spaltprodukte handelt destillativ entfernt. Die Destillation erfolgt vorzugsweise bei 140 bis 150°C und 0,5 bis 8 hPa (abs.).

Die nach dem erfindungsgemäßen Verfahren hergestellten Diorganopolysiloxane mit Triorganosiloxygruppen als endständigen Einheiten haben eine Viskosität von vorzugsweise 250 bis 1 000 000 mPa.s bei 25°C, besonders bevorzugt 500 bis 40 000 mPa.s bei 25°C.

Die erfindungsgemäß hergestellten Diorganopolysiloxane mit Triorganosiloxygruppen als endständigen Einheiten können für alle Zwecke verwendet werden, bei denen auch die nach dem bisher bekannten Verfahren hergestellten Diorganopolysiloxane mit Triorganosiloxygruppen als endständigen Einheiten eingesetzt werden konnten, z. B. als Fadengleitmittel zur Herstellung von Organopolysiloxanelastomeren, die durch Radikalbildner oder durch Anlagerung von SiC-gebundenen Vinylgruppen an Si-gebundenen Wasserstoff vernetzt sind, und zur Herstellung von klebrige Stoffe abweisenden Überzügen.

Das in den folgenden Beispielen verwendete Phosphornitridchlorid wurde hergestellt wie folgt:

Ein Gemisch aus 417 g (2 Mol) Phosphorpentachlorid und 53,5 g (1 Mol) Ammoniumchlorid in 1000 ml Tetrachlorethan wird 12 Stunden zum Sieden unter Rückfluß erwärmt. Aus der so erhaltenen, hellgelben Lösung werden bei 160°C und unter Erniedrigung des Drucks bis auf etwa 1,33 HPa (abs.) die flüchtigen Anteile entfernt. Als Rückstand verbleiben gelbliche Kristalle, die im wesentlichen aus der Verbindung der Formel

$$Cl_3PNPCl_2NPCl_3 . PCl_6$$

bestehen.

Beispiel 1

4

In einem beheizbaren Glaskolben mit Rührwerk und Destillationsaufsatz werden 200 g einer Mischung von cyclischen Dimethylpolysiloxanen mit 3 bis 11 Siloxaneinheiten je Molekül, wobei der Anteil von Octamethylcyclotetrasiloxan den Anteil der übrigen cyclischen Dimethylpolysiloxane überwiegt, mit 3,4 g Vinyldimethylchlorsilan und 0,04 ml einer 25 gewichtsprozentigen Lösung von Phosphornitridchlorid in Methylenchlorid vermischt.Das Reaktionsgemisch wird auf 90 °C erhitzt und 5 Stunden bei 90 ° langsam gerührt. Anschließend werden zu der Reaktionsmischung 13,6 g einer Mischung von in den endständigen Einheiten je eine Si-gebundene Hydroxylgruppe enthaltenden Dimethylpolysiloxanen mit durchschnittlich 12,5 Dimethylsiloxaneinheiten je Molekül und 3,5 Gewichts-% Si-gebundener Hydroxylgruppen zugeben.

Die Reaktionsmischung wird dann weitere 2 Stunden bei 90 °C und 20 hPa (unter Wasserstrahlvakuum) gerührt. Zum Unwirksammachen des Phosphornitridchlorids und zum Entfernen restlichen Chlorwasserstoffs werden 1,0 g 1,3-Divinyl-1,1,3,3-tetramethyldisilazan zur Reaktionsmischung dann zugesetzt. Nach zweistündigem Erhitzen der Reaktionsmischung bei 150 °C und 1 hPa (abs.) zur Entfernung der flüchtigen Bestandteile werden 192 g ( 88 % der Theorie) eines wasserklaren Dimethylpolysiloxans mit Vinyldimethylsiloxygruppen als endständigen Einheiten und mit einer Viskosität von 575 mPa.s bei 25 °C erhalten. Das so erhaltene Dimethylpolysiloxan besitzt eine Jodzahl (= Zahl, die angibt, wieviel g Jod von 100 g Substanz gebunden werden) von 3,8.

Beispiel 2 bis 9

Die im Beispiel 1 beschriebene Arbeitsweise wird jeweils wiederholt mit den Abänderungen, daß anstelle der 3,4 g Vinyldimethylchlorsilan und anstelle der 13,6 g der dort verwendeten Mischung von in den endständigen Einheiten je eine Si-gebundene Hydroxylgruppe aufweisenden Dimethylpolysiloxanen jeweils die in Tabelle 1 angegebenen Mengen an Vinyldimethylchlorsilan und hydroxyendständigem Dimethylpolysiloxan eingesetzt werden. Die jeweiligen Ausbeuten an Dimethylpolysiloxan mit Vinyldimethylsiloxygruppen als endständigen Einheiten, dessen jeweilige Viskosität und die jeweils ermittelte Jodzahl sind in der Tabelle 1 angegeben. Wie aus der Tabelle 1 zu entnehmen ist, läßt sich die Viskosität des Endprodukts durch die eingesetzte Menge an Vinyldimethylchlorsilan steuern.

Tabelle 1

| Beispiele | $CH_2 = CH(CH_2)_2SiCl$ | | $HO[Si(CH_3)_2O]_{12,5}H$ | | Viskosität mPa.s bei 25 °C | Ausbeute | | Jodzahl[2] |
|---|---|---|---|---|---|---|---|---|
| | g | Gew.-%[1] | g | Gew.-%[1] | | g | % d.Th. | |
| 1 | 3,4 | 1,7 % | 13,6 | 6,8 % | 575 | 192 | 88 | 3,8 |
| 2 | 3,0 | 1,5 % | 12,0 | 6,0 % | 750 | 189 | 87 | 3,58 |
| 3 | 2,5 | 1,25 % | 9,7 | 4,85 % | 1.000 | 180 | 83 | 3 |
| 4 | 1,2 | 0,6 % | 4,86 | 2,43 % | 3.960 | 176 | 81 | 1,63 |
| 5 | 1,0 | 0,5 % | 3,88 | 1,94 % | 7.530 | 180 | 83 | 1,47 |
| 6 | 0,8 | 0,4 % | 3,2 | 1,6 % | 10.350 | 178 | 82 | 1,3 |
| 7 | 0,7 | 0,35 % | 2,8 | 1,4 % | 20.000 | 178 | 82 | 1,05 |
| 8 | 0,6 | 0,3 % | 2,4 | 1,2 % | 40.500 | 189 | 87 | 0,93 |
| 9 | 0,2 | 0,1 % | 0,8 | 0,4 % | 430.000 | 189 | 87 | 0,3 |

[1] bezogen auf das Gewicht der eingesetzten Menge an cyclischem Dimethylpolysiloxan
[2] Zahl, die angibt wieviel g Jod von 100 g Substanz gebunden werden

Beispiel 10 bis 12

Die Arbeitsweise in Beispiel 1 wird jeweils wiederholt mit den Abänderungen, daß anstelle der 200 g der dort verwendeten Mischung von cyclischen Dimethylpolysiloxanen 200 g Dimethyldichlorsilanhydrolysat, das zu 30 Gewichts-% aus einer Mischung von cyclischen Dimethylpolysiloxanen mit 3 bis 11 Siloxaneinheiten je Molekül und zu 70 Gewichts-% aus einer Mischung von Dimethylpolysiloxandiolen mit 20 bis 50 Siloxaneinheiten je Molekül besteht, und anstelle der 3,4 g Vinyldimethylchlorsilan und anstelle der 13,6 g der dort verwendeten Mischung von in den endständigen Einheiten je eine Si-gebundene Hydroxylgruppe aufweisenden Dimethylpolysiloxanen jeweils die in Tabelle 2 angegebenen Mengen an Vinyldimethylchlorsilan und hydroxyendständigem Dimethylpolysiloxan eingesetzt werden. Die jeweiligen Ausbeuten an Dimethylpolysiloxan mit Vinyldimethylsiloxygruppen als endständigen Einheiten, dessen jeweilige Viskosität und die jeweils ermittelte Jodzahl sind in Tabelle 2 angegeben. Wie aus Tabelle 2 zu entnehmen ist, läßt sich die Viskosität des Endprodukts durch die eingesetzte Menge an Vinyldimethylchlorsilan steuern.

Die in den Beispielen 1 bis 12 hergestellten Dimethylpolysiloxane mit Vinyldimethylsiloxygruppen als endständigen Einheiten haben eine enge, mittels HPLC (High Pressure Liquid Chromatography) bestimmte Molekulargewichtsverteilung.

Tabelle 2

| Beispiele | $CH_2 = CH(CH_3)_2 SiCl$ | | $HO[Si(CH_3)_2 O]_{12,5}H$ | | Viskosität mPa.s bei 25°C | Ausbeute | | Jodzahl[2] |
|---|---|---|---|---|---|---|---|---|
| | g | Gew.-%[3] | g | Gew.-%[3] | | g | % d.Th. | |
| 10 | 2,0 | 1 % | 7,8 | 3,9 % | 1.276 | 182 | 84 | 2,41 |
| 11 | 1,0 | 0,5 % | 3,88 | 1,94 % | 8.672 | 189 | 87 | 1,3 |
| 12 | 0,6 | 0,3 % | 2,4 | 1,2 % | 43.500 | 184 | 85 | 0.81 |

[2] Zahl, die angibt wieviel g Jod von 100 g Substanz gebunden werden
[3] bezogen auf das Gewicht der eingesetzten Menge an Dimethyldichlorsilanhydrolysat

## Ansprüche

1. Verfahren zur Herstellung von Diorganopolysiloxanen mit Triorganosiloxygruppen als endständigen Einheiten, dadurch gekennzeichnet, daß

in einer 1. Stufe cyclisches Diorganopolysiloxan und/oder Diorganodichlorsilanhydrolysat mit 0,05 bis 3 Gewichts-% Triorganochlorsilan, bezogen auf das Gewicht der jeweils eingesetzten Menge an cyclischem Diorganopolysiloxan und/oder Diorganodichlorsilanhydrolysat, in Gegenwart von 1 bis 50 Gewichts-ppm Phosphornitridchlorid, bezogen auf das Gesamtgewicht der jeweils eingesetzten Menge an Organosiliciumverbindungen, zu α-Triorganosiloxy-ω-chlor-diorganopolysiloxan umgesetzt wird und

in einer 2. Stufe das in der 1. Stufe erhaltene α-Triorganosiloxy-ω-chlor-diorganopolysiloxan in einer Kondensationsreaktion durch Zugabe von in den endständigen Einheiten je eine Si-gebundene Hydroxylgruppe aufweisendem Diorganopolysiloxan zur Reaktionsmischung der 1.Stufe, in Mengen von 1 bis 1,2 Grammol Si-gebundener Hydroxylgruppe in diesem Diorganopolysiloxan je Grammatom Si-gebundenen Chlors im Triorganochlorsilan, weiter umgesetzt wird und

in einer 3. Stufe nach Zugabe von Hexaorganodisilazan zur Reaktionsmischung der 2. Stufe zum Unwirksammachen von Phosphornitridchlorid und zum Entfernen von Chlorwasserstoff von den Diorganopolysiloxanen mit Triorganosiloxygruppen als endständigen Einheiten die niedrig siedenderen Bestandteile.destillativ entfernt werden.

2. Verfahren nach Anspruch 1, dadurch gekennzeichnet, daß als cyclisches Diorganopolysiloxan solches der Formel

$(R_2SiO)_n$

eingesetzt wird, wobei R gleiche oder verschiedene, gegebenenfalls halogenierte Kohlenwasserstoffreste mit 1 bis 18 Kohlenstoffatomen je Rest bedeutet und n eine ganze Zahl im Wert von 3 bis 11 ist.

3. Verfahren nach Anspruch 1, dadurch gekennzeichnet, daß als Diorganodichlorsilanhydrolysat solches eingesetzt wird, daß aus 20 bis 30 Gewichts-% cyclischem Diorganopolysiloxan der Formel

EP 0 319 977 A2

$(R_2SiO)_n$

und aus 70 bis 80 Gewichts-% Diorganopolysiloxan der Formel

$HO(R_2SiO)_mSiR_2OH$,

jeweils bezogen auf das Gewicht der jeweils eingesetzten Menge an Diorganodichlorsilanhydrolysat, besteht, wobei R und n die im Anspruch 2 angegebene Bedeutung haben und m eine ganze Zahl im Wert von 20 bis 50 ist.

4. Verfahren nach Anspruch 1, dadurch gekennzeichnet, daß als Triorganochlorsilan solches der Formel

$R_3SiCl$

eingesetzt wird, wobei R die im Anspruch 2 angegebene Bedeutung hat.

5. Verfahren nach Anspruch 1, dadurch gekennzeichnet, daß als Triorganochlorsilan Vinyldimethylchlorsilan eingesetzt wird.

6. Verfahren nach Anspruch 1, dadurch gekennzeichnet, daß als in den endständigen Einheiten je eine Si-gebundene Hydroxylgruppe aufweisendem Diorganopolysiloxan solches der Formel

$HO(R_2SiO)_pSiR_2OH$

eingesetzt wird, wobei p eine ganze Zahl im Wert von 8 bis 13 ist und R die im Anspruch 2 angegebene Bedeutung hat.

7. Verfahren nach einem der Ansprüche 1 bis 6, dadurch gekennzeichchnet, daß die Diorganopolysiloxane mit Triorganosiloxygruppen als endständigen Einheiten von bei 140 bis 150 °C bei 0,5 bis 8 hPa (abs.) siedenden Anteilen befreit werden.

7